# EUROPEAN PATENT SPECIFICATION

(11) **EP 1 802 020 B1**
(45) Date of publication and mention of the grant of the patent: **14.10.2009**
(21) Application number: 05027910.8
(22) Date of filing: 20.12.2005
(51) Int. Cl.: H04L 1/16

(54) **Apparatuses and methods for transmitting and receiving a sequence of packets**
Vorrichtungen und Verfahren zum Übertragen und Empfangen von einer Paketfolge
Appareils et procédés de transmission et de réception d'une séquence de paquets

(43) Date of publication of application: 27.06.2007
(73) Proprietor: NTT DoCoMo, Inc., Tokyo 100-6150 (JP)
(72) Inventor: Auer, Gunther, 80339 München (DE); Omiyi, Peter, 28759 Bremen (DE); Haas, Harald, 28755 Bremen (DE)
(74) Representative: Zinkler, Franz

(56) References cited:
- US-B1- 6 662 330
- OMIYI P E ET AL: "Improving time-slot allocation in 4th generation OFDM/TDMA TDD radio access networks with innovative channel-sensing" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 3133-3137, XP010709781 ISBN: 0-7803-8533-0

## Description

This invention relates to the field of cellular as well as ad hoc and multi-hop wireless networks, for example, for TDMA/TDD (Time Division Multiple Access/Time Division Duplexing) and/or OFDM/TDD (Orthogonal Frequency Division Multiplexing) based networks and addresses dynamic channel allocation and medium access control (MAC) for multi-user access.

Unlike spread spectrum techniques OFDM does not have an in-built interference resistance mechanism which would enable OFDM to be used in multiple cell environments such that a full frequency or sub-channel reuse would be possible. Therefore, the issue of an intelligent channel reuse scheme in order to effectively combat co-channel interference (CCI) is an open problem. In addition, in ad hoc or multi-hop networks, the lack of central radio resource management control adds a further complication.

Busy-Burst Time Division Multiple Access (BB-TDMA) is a "busy-burst" broadcast protocol which utilizes the properties of TDD, namely the channel reciprocity, to support an efficient interference management. BB-TDMA is described in more detail, for example by P. Omiyi and H. Haas, in "Improving Time-Slot Allocation in 4th Generation OFDM/TDMA TDD Radio Access Networks with Innovative Channel-Sensing," in Proceedings of the International Conference on Communications ICC'04, vol. 6, Paris, France: IEEE, June 20-24 2004, pp. 3133 - 3137, and in the patent application "Communications network using reservation indicator," from P. Omiyi and H. Haas, PCT/EP2004/011840, priority date: 24.10.2003. A node that is currently receiving data, broadcasts a busy-burst, which prevents potential interferers from transmitting. The busy-burst is broadcast in mini-slots, which occupy a portion of the time-frame structure, with one mini-slot for every slot. Therefore, every transmitter must "listen" to the mini-slots to determine, if it can transmit as scheduled or not without causing significant interference to other users.

In order to enable Quality of Service (QoS) support over a wireless link Automatic Repeat Request (ARQ) schemes are a powerful tool. Instead of choosing a coding and modulation format designed for a worst case scenario, the receiver requests retransmission of certain packets which cannot be correctly decoded. An essential requirement for any Automatic Repeat Request protocol to work is feedback information from the receiver whether the packet has been correctly received (acknowledgment or ACK) or not (no acknowledgment or NACK).

In the prior art solution for Busy-Burst Time Division Multiple Access the receiver does transmit a busy-burst in a dedicated mini-slot if a packet has been successfully received and if there are successive packets scheduled for transmission. If a busy-burst is broadcast, the transmitter knows that the packet was successfully received. To this end, the busy-burst serves as an implicit acknowledgment, which informs the transmitter whether packets are successfully received or not on this particular time slot. On the other hand, if the transmitted packet is the last packet, i.e. there is no further data scheduled for transmission, or not for this particular time slot, the receiver will not acknowledge successful reception of the packet. This effectively means that the transmitter cannot know about the status of the last packet, if no further support for acknowledgments is implemented in the protocol.

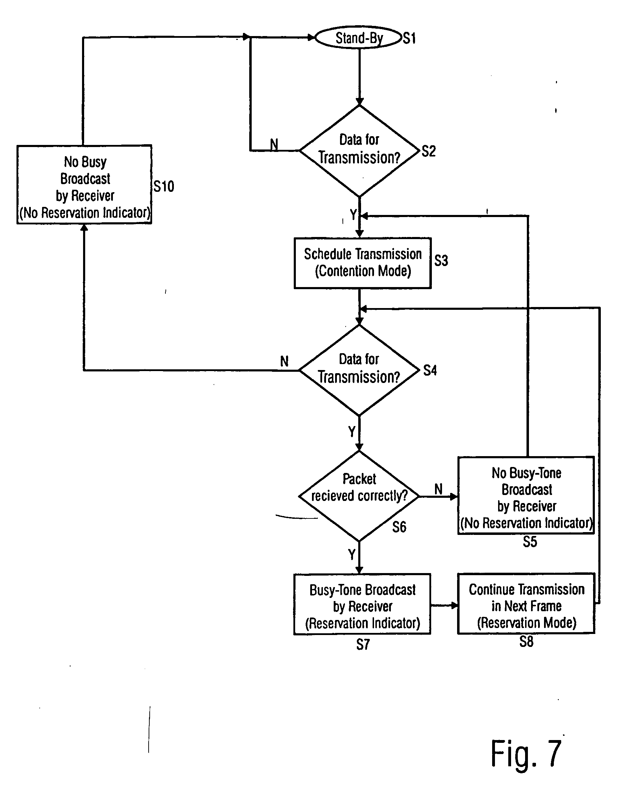

Fig. 7 shows an exemplary Busy-Burst Time Division Multiple Access flow chart. In Busy-Burst Time Division Multiple Access (BB-TDMA) the transmitter is in stand-by (S1) when no data is to be transmitted. When a user has data to transmit and is in contention mode (S2), the transmission is scheduled for some random, future, TDMA frame. The user or transmitter is in contention mode if it is attempting to transmit in a contention slot and in reservation mode when transmitting in a reserved slot. Within this aforementioned frame, the transmitter selects an available contention slot (S3) which is determined by not detecting a busy-tone in the slot's conflict-signalling mini-slot in the preceding frame. The intended receiver does not broadcast a busy-burst in the associated mini-slot in the current frame, if the transmission is received with unacceptable interference (S5), i.e. in outage, or if the transmission is received without outage but the transmitter indicates that it does not intend to continue its transmission in the subsequent TDMA frame (S10). If the transmitter did intend to continue transmission in the next frame, but does not detect a busy-burst signal (S5), it correctly assumes that outage has occurred and re-schedules transmission (S3) within a contention slot in a subsequent frame. On the other hand, if the transmitter did intend to continue transmission in the next frame, and detects a busy-burst signal from the intended receiver (S7), it continues the transmission by sending a next packet within a reserved slot (S8) in a subsequent frame.

Fig. 8 shows an exemplary scenario, wherein a transmitter T1 wants to transmit data D1 to an intended or target receiver R1, and wherein a second transmitter T2, located in the neighbourhood of receiver R1, wants to transmit data D2 to a second receiver R2. To determine an available contention slot transmitter T1 evaluates the busy signals BS22 of the second receiver R2 or respective busy-signals of other receivers and will only select a time slot for transmitting data D1 to receiver R1 if it does not detect a busy-signal in the respective mini-slot. However, it may occur that transmitter T1 selects a slot for transmitting data D1 to receiver R1 and at the same time, the second transmitter T2 selects the same slot for transmitting data D2 to the second receiver R2 because the second transmitter T2 did not detect a busy-tone BS11 of the Transmitter T1 or respective busy-tones from other receivers for this time-slot.

This can, for example, happen when both transmitters T1, T2 are in a contention mode, did not transmit in a preceding frame and select both the same time-slot for a data transmission in the following frame.

In this case, the interference I12 caused by the second transmitter T2 using the same time-slot might prohibit the receiver R1 from receiving the data D1 correctly. In this case, the receiver R1 will not send a busy signal BS11 to a transmitter T1 and this particular time-slot will remain in contention mode. In case, the receiver R1 received the data D1 correctly, the receiver R1 will send a busy signal BS11 on the respective mini-slot of the particular time-slot used for the successful transmission and, thus, would reserve this time-slot for subsequent data to be sent from the transmitter T1 to the receiver R1.

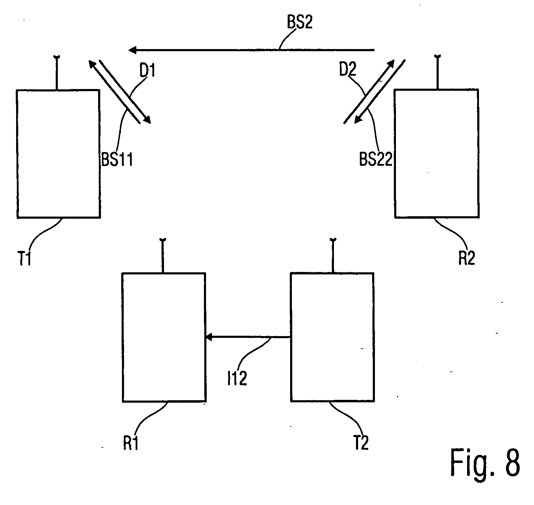

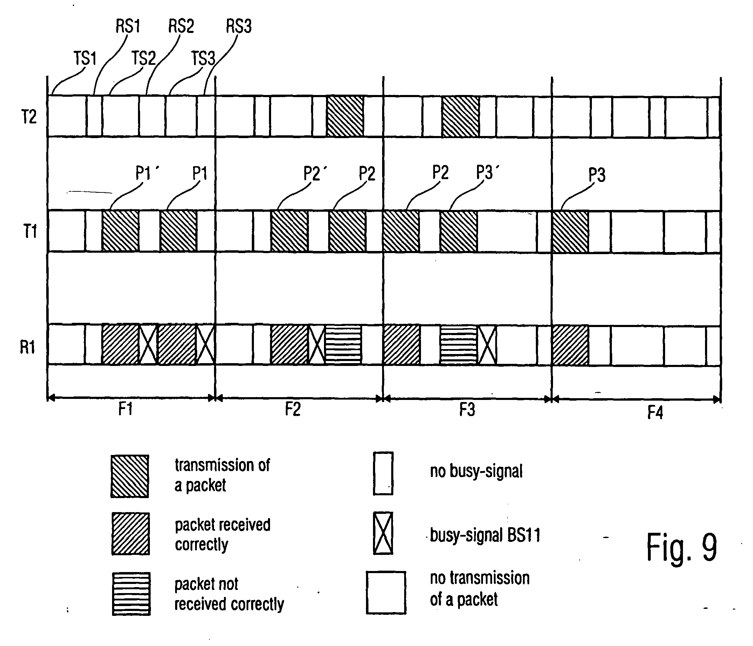

Fig. 9 explains the principle of BB-TDMA for an exemplary scenario as described in Fig. 8 comprising the receiver R1, the transmitter T1 and the second transmitter T2. Fig. 9 shows four TDMA-frames F1 to F4, each comprising three time slots TS1 to TS3 and three mini-time-slots MS1 to MS3, wherein the mini-time-slot MS1 transports the busy-tone respective to the time-slot TS1, etc.

In a first example, transmitter T1 wants to transmit three data packets P1 to P3 to the receiver R1. Therefore, transmitter T1 transmits the first packet P1 in the third time slot TS3 in the first frame F1. Receiver R1 receives the first packet P1 correctly, and as further data is to be sent, transmits a busy-tone in the third mini-time-slot MS3 of the first frame F1.

As the transmitter T1 detects the busy-signal for the third time-slot TS3, transmitter T1 uses the thus reserved third time-slot TS3 for transmitting the second packet P2 in the second frame F2. As the second transmitter T2 also sends a packet on the third time slot TS3 of the second frame F2, interference at the receiver R1 occurs and prohibits receiver R1 to receive the second data packet P2 of transmitter T1 correctly. Therefore, receiver R1 does not transmit a busy signal in the third mini-slot MS3 of the second frame F2, thus, transmitting an implicit no-acknowledgement (NACK) signal to transmitter T1. As transmitter T1 does not receive a busy-signal BS11, transmitter T1 changes to contention mode (S3 in Fig. 7) and looks for an available contention slot. In this case, transmitter T1 selects the first time-slot TS1 of the third frame F3 to retransmit the second packet P2. Receiver R1 receives the second packet P2 correctly and transmits a busy-signal in a first mini-slot MS1 of the third frame F3 and, thus, transmits an implicit acknowledgement signal to the transmitter T1 and reserves the first time-slot TS1 for the next, third packet P3. Accordingly, transmitter T1 continues the transmission (S8 of Fig. 7) by transmitting the third packet P3 using the reserved time-slot TS1 again. The receiver R1 receives the third packet P3 correctly, but, as the third packet P3 is also the last packet of the transmission does not send a busy-signal in the first mini-slot MS1.

In a second scenario, the transmitter T1 wants to send three packets P1' to P3' to the receiver R1. As depicted in Fig. 9, the first two packets P1' and P2' sent in the second time-slot TS2 are received correctly by the receiver R1. Accordingly, the receiver R1 acknowledges the correct reception of the data packets P1' and P2' by sending a busy-signal on the second mini-slot MS2. During the third frame F3 not only transmitter T1 but also the second transmitter T2 transmits a packet over time-slot TS2. Due to the interference caused by the second transmitter T2 the receiver R1 does not receive the third and last packet P3' of transmitter T1 correctly. But, as the third P3' is the last packet, the transmitter T1 does not expect a busy-signal as implicit acknowledgement and, therefore, does not know that the last packet P3' has not been received correctly.

The scenarios as described in Fig. 9, may, for example, occur when the second transmitter T2 is moving towards receiver R1 and selects the same time-slot as transmitter T1 because at that point of time, the second transmitter T2 did not detect a busy-signal from receiver R1. Other reasons for this scenario may be that the transmission characteristics between receiver R1 and the second transmitter T2 change over time, e.g. due to multi-channel propagation, such that again the second transmitter T2 did not detect a busy-signal of the receiver R1 in a previous frame.

As was described based on Fig. 9, the implicit acknowledge does not work for the last packet of a transmission. Therefore, conventional BB-TDMA systems as described based on Figs. 7 to 9 have the disadvantage that the transmitter does not know whether the last packet has been received correctly by the receiver and that no solution is provided to assure a correct transmission of the last packet.

The US 6,662,330 B1 describes an automatic repeat request (ARQ) protocol for transferring delay-sensitive data blocks between sending and receiving devices over an error prone communication link. The ARQ protocol allows either the sender or receiver to initiate termination of the transfer from sender to receiver of one or more blocks. Blocks eligible for negative acknowledgment by a receiving device are determined by a reception determination procedure performed by the sending device. The negative acknowledgement of illegible blocks is based on a number of consecutive blocks reported as corrupt, which number may include an allowable number of non-corrupt blocks.

It is the object of the present invention to provide an improved apparatus and method for transmitting and an improved apparatus and method for receiving to enable a retransmission of the last packet in case of an incorrect reception thereof for a busy-signal based channel allocation.

This object is achieved by an apparatus for receiving according to claim 1, an apparatus for transmitting according to claim 6, a method for receiving according to claim 9, a method for transmitting according to claim 10 and a computer program according to claim 11.

The present invention is based on the finding that when both, the apparatus for transmitting and the apparatus for receiving, know that a packet being a last packet in a sequence of packets has been transmitted, the same busy-signal can be used in case of an unsuccessful reception of the last packet to request a retransmission of the last packet. Thus a correct transmission of the last packet is facilitated.

The above mentioned is possible for any packet having a position which is known to the apparatus for receiving and the apparatus for transmitting. Therefore, although embodiments described in the following may only comprise a distinctive handling of a last packet, these embodiments can also be applied to other criteria useful to distinguish between a packet having a first position, corresponding in the aforementioned example to a first to penultimate packet in a sequence of packets, and a packet having a second position in the sequence of packets, corresponding in the aforementioned example to the last packet.

In a preferred embodiment of the present invention, the BB-TDMA protocol for dynamic self-organizing channel allocation is extended to enable an acknowledgement if the transmitted packet is the last packet. While the following descriptions are limited to a TDMA system, an extension to OFDMA (Orthogonal Frequency Division Multiple Access) with dynamic sub-channel allocation as described by H. Haas, V. D. Nguyen, P. Omiyi and G. Auer, "Dynamic Sub-Channel Allocation in Cellular Multiuser OFDM/TDD," *Patent Application,* filing date: 13.09.2005, is straightforward.

Furthermore, the invention can not only be used with TDD but also with FDD (Frequency Division Duplex) and with TDMA, FDMA (Frequency Division Multiple Access), CDMA (Code Division Multiple Access) and OFDM and also for systems with channel and/or sub-channel allocation as will be described later.

Furthermore, in a embodiment of the present invention the transmitted packet having a second position is the last packet in an ongoing transmission or packet sequence. The inventive transmitter needs to inform the inventive apparatus for receiving, for example based on the BB-TDMA protocol, whether the scheduled packet is the last packet or not. This means that both, the inventive apparatus for transmitting and the inventive apparatus for receiving know, for example, about the number of packets in the queue. The inventive modification of the busy-signal protocol, for example a BB-TDMA protocol, provides a simple and yet effective way to establish an acknowledgment for the last packet.

While with conventional busy-signal systems, for example BB-TDMA, a busy-signal is never transmitted in case the current packet is the last in the queue or sequence of packets, the inventive apparatus for receiving transmits a busy-signal in case the packet has not been decoded correctly. This busy-signal is then an indicator for the inventive apparatus for transmitting or to retransmit the last packet in the queue. This effectively implements an automatic repeat request (ARQ) scheme. So, unlike the case when the transmitted packet is not the last packet, where a busy-signal serves as a reservation for the next packet after *successful* reception of the packet, the busy-signal is transmitted after an outage, prompting the apparatus for transmitting to retransmit the last packet. For potential interferers the busy-signal indicates that the time-slot is to be used in either case, thus, serving the main objective of slot reservation.

This missing possibility to request a retransmission of the last packet is especially disadvantageous in cases where the whole communication just comprises one single packet. In this case, if this only packet has not been received correctly, the complete communication failed.

The limitation of conventional busy-signal systems, for example conventional BB-TDMA systems, that an implicit acknowledgment by means of transmitting a busy-signal is only possible if the current packet is not the final packet in the queue can be effectively overcome without any additional signalling overhead or increase in computational complexity. In fact, while the last packet in, for example, conventional BB-TDMA is disadvantaged with respect to other packets, it becomes in the preferred embodiment privileged with the inventive solution. The reason is that a retransmission is reserved only for the packet having a second position in a sequence of packets, for example the last packet, for other packets the transmitter goes back into contention mode, which means that other potential transmitters are also allowed to compete for the next time slot.

Preferred embodiments of the present invention are described in detail with respect to the following figures, in which:
- Fig. 1: shows an embodiment of an inventive apparatus for receiving;
- Fig. 2: shows an embodiment of an inventive apparatus for transmitting;
- Fig. 3: shows an embodiment of the inventive method of receiving;
- Fig. 4: shows a flow-chart of an embodiment of an inventive method for transmitting;
- Fig. 5A: shows a flow-chart of an inventive BB-TDMA system, providing an acknowledgement for the last packet (preferred embodiment);
- Fig. 5B: shows a flow-chart of another inventive BB-TDMA system, providing an acknowledgement for the last packet;
- Fig. 6A: shows an exemplary communication network scenario with an inventive apparatus for transmitting and receiving;
- Fig. 6B: shows a diagram of an exemplary channel allocation based on the preferred inventive method and the scenario according to Fig. 6A;
- Fig. 7: shows an exemplary flow chart for a BB-TDMA system;
- Fig. 8: shows an exemplary communication network scenario comprising two transmitter and two receiver for BB-TDMA; and
- Fig. 9: shows an exemplary channel allocation and interference diagram based on the scenario shown in Fig. 8.

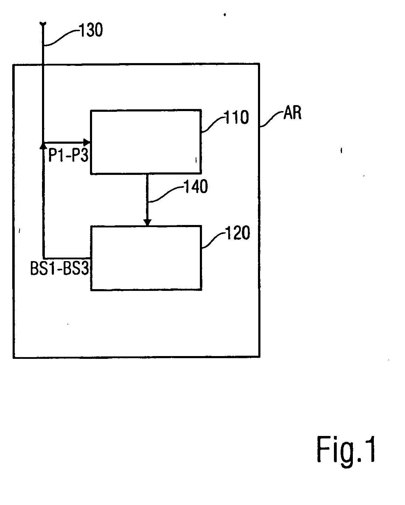

Fig. 1 shows an embodiment of an inventive apparatus AR for receiving comprising a receiver 110, a busy-signal transmitter 120 and an antenna 130. The sequence of packets comprises, for example three packets: a first packet P1, a second packet P2 and a third and last packet P3. The receiver 110 receives a packet P1, P2, P3 of a sequence packets via the antenna 130 and checks, whether the packet P1, P2, P3 has been successfully received. The busy-signal transmitter 120 is operative to transmit a respective first, second or third busy-signal BS1, BS2, BS3 via antenna 130, when the packet is successfully received and the packet has a first position in the sequence of packets, and when the packet is not successfully received and the packet has a second position being different from the first position.

In a embodiment the first position in the sequence of packets is any position from the first position to the penultimate position in the sequence of packets or in other words any position which is not the last position in a sequence of packets. Correspondingly, in a embodiment, the second position is the last position or in other words the packet having the second position is the last packet in a sequence of packets. Thus, in a embodiment according to Fig. 1, the first and second packet P1, P2 have a first position and the third packet P3 has a second position in the sequence of packets.

The information, whether a packet is, for example, the last packet, can be transmitted in various ways. In a preferred embodiment the apparatus AT for transmitting informs the apparatus AR for receiving by using a one-bit field in its transmission. Thus, the receiver 110 does not only check, whether the packet P1, P2, P3 has been successfully received but also evaluates this one-bit field and outputs a binary signal 140 to the busy-signal transmitter 120 wherein, for example, a "1" indicates to send the respective busy-signal and a "0" defines to send no busy-signal.

In another embodiment, the receiver receives a length indicator indicating the length of the sequence of packets to be transmitted over this time-slot, and wherein the receiver 110 decrements this value each time another packet of the sequence of packets has been received successfully. Thus, the apparatus AR for receiving also knows whether the received packet is the last packet.

In other embodiments of the inventive apparatus for receiving the busy-signal transmitter 120 may receive the information, whether or not the packet has been successfully received via signal 140 and decide itself whether or not to transmit the busy-signal.

A packet is considered being correctly or successfully received, when, for example, after decoding and error correction, a valid symbol has been detected, or in other words, the packet has been correctly decoded.

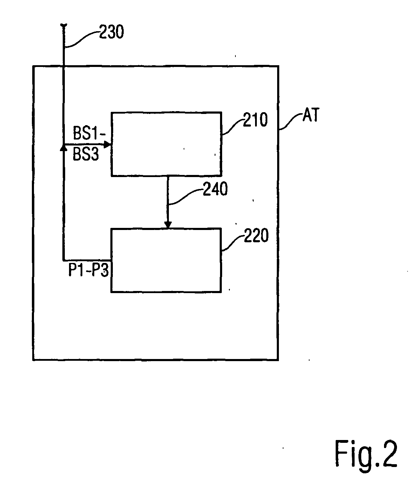

Fig. 2 shows an embodiment of an inventive apparatus AT for transmitting, comprising a busy-signal receiver 210, a transmitter 220 and an antenna 230, wherein the busy-signal receiver 210 and the transmitter 220 are connected to the antenna 230. The busy-signal receiver 210 is operative to receive the busy-signals BS1, BS2, BS3, for example in the mini-time-slots for busy-signals for BB-TDMA systems. The transmitter 220 for transmitting a packet P1, P2, P3 having a first or second position in the sequence is operative to transmit via the antenna 230 a packet having the second position, when a busy-signal has been received and the packet having the first position has been transmitted in a proceeding transmission interval, or to retransmit the packet having the second position, when a busy-signal has been received and the packet having the second position has been transmitted in a preceding transmission interval.

The busy-signal receiver 210 outputs a signal 240 to the transmitter 220 which busy-signals the busy-signal receiver 210 has received, or in other words for which time-slots or communication channels the respective busy-signals have been detected. In reservation mode, only the busy-signals for those channels are of interest, which have been used for a data transmission in a preceding time-interval by the transmitter 220, i.e. for those channels, for which the apparatus AT for transmitting expects an "acknowledgement" or a "no acknowledgement" signal from the intended receiver. In contention mode, the busy-signal receiver 210 checks for busy-signals in other channels to determine contention slots or contention channels wherein these contention channels can be channels which have not been used by the transmitter 220 in a preceding time interval, but might also be a channel which has been used by the transmitter 220 in a proceeding time-interval but for which the busy-signal receiver 210 did not receive the respective busy-signal from the intended transmitter. In a preferred embodiment the transmitter 220 selects a contention slot or channel which has not been used in a preceding transmission-interval because an interference or collision at the intended receiver must be assumed due to the missing busy-signal from the intended receiver.

In an embodiment the transmitter 220 transmits, for example with the first packet, an information to the apparatus for receiving AR about the length of the sequence of packets or the number of remaining packets to be sent. In case the busy-signal receiver 210 receives no busy-signal from the intended apparatus for receiving AR the transmitter 220 selects a contention slot and retransmits the packet which was not successfully received at the apparatus AR for receiving AR and transmits together with this packet an updated information about the remaining packets to be sent over this selected channel.

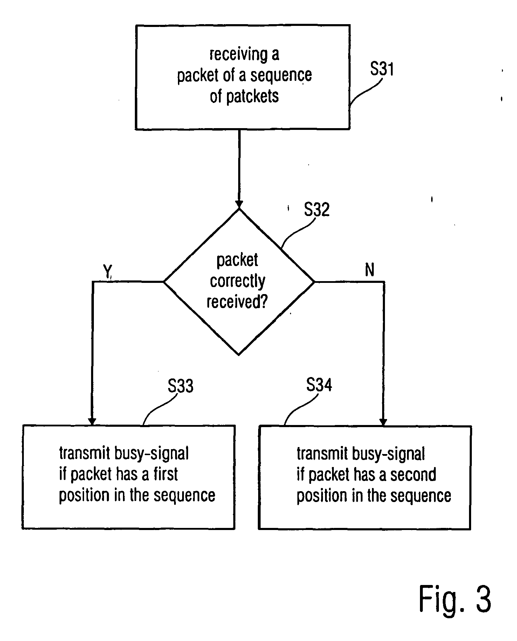

Fig. 3 describes a flow chart of an embodiment of the inventive method for receiving a sequence of packets, comprising the step S31 of receiving a packet of the sequence and the step S32 of checking, whether the packet has been successfully received. In case the packet is successfully received, the method for receiving comprises a step S33 of checking whether the received packet has a first position and transmitting a busy-signal in case the packet has a first position. In case the packet has not been correctly received the method for receiving comprises a step S34 of checking, whether the packet has a second position in a sequence of packets and of transmitting a busy-signal, in case the packet has a second position.

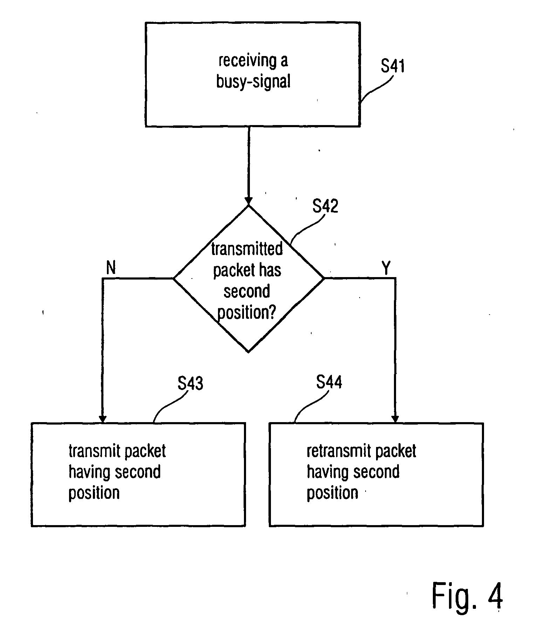

Fig. 4 shows a flow chart of an embodiment of the method for transmitting a sequence of packets, comprising the step S41 of receiving a busy-signal and the step S42 of checking whether the packet having the second position in the sequence of packets has been transmitted in a preceding transmission-interval. In case a different packet than the one having the second position has been transmitted in a proceeding transmission interval, the step S43 of transmitting the next packet in the sequence of packets or the packet having the next position in the sequence of packets is performed. This comprises transmitting the packet having the second position in case the packet transmitted in the proceeding transmission interval has been the penultimate packet or last packet of the packets having a first position in the sequence. In case the packet having a second position has been transmitted in the preceding time interval, the packet of the second position is retransmitted (step S44).

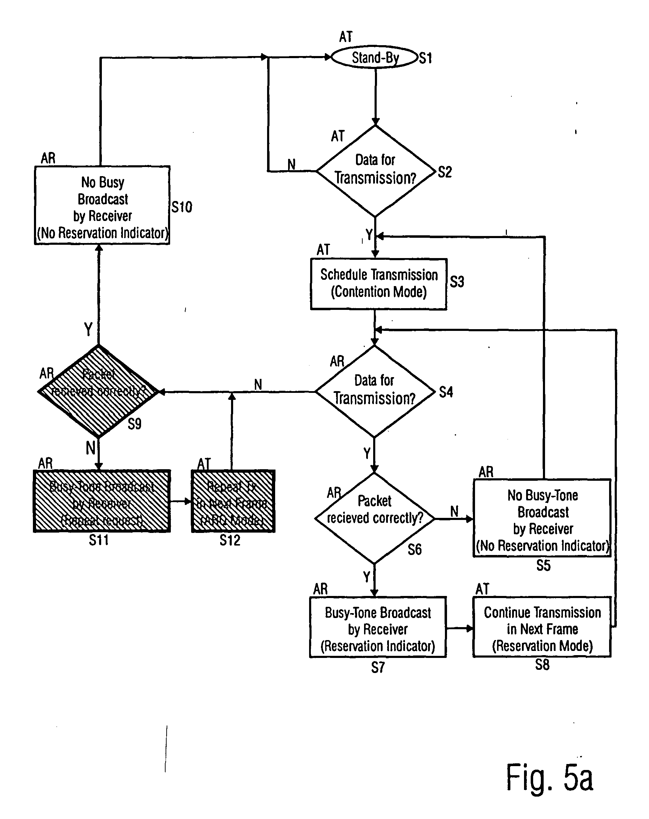

Fig. 5A shows a flow-chart of a preferred embodiment of the inventive method, or in other words of a modified BB-TDMA protocol. The blocks or steps which are different to a conventional BB-TDMA shown in Fig. 7 are highlighted. Additionally, the entities performing the different steps of the method, the apparatus AR for receiving and the apparatus AT for transmitting have been added to the flow chart for a better understanding of the protocol. In contrast to Fig. 7, the apparatus for receiving checks, if no further data for transmission is indicated, or in other words the last packet has been received (step S4), additionally, whether the last packet (or the packet having the second position) has been received correctly (step S9). Now, only if the packet has been received correctly (Y) the apparatus for receiving proceeds to step S10 which means that the apparatus AR for receiving does not transmit the busy-signal, thereby acknowledging to the apparatus AT for transmitting the correct reception of the last packet. In case, the last packet has not been received correctly (N), the apparatus for receiving AR remains in reservation mode and proceeds to step S11 and transmits the busy-signal as "no acknowledgement" or repeat request. The apparatus AT for transmitting, upon reception of the busy-signal from the apparatus AR for receiving, repeats the transmission (Tx) of the last packet (the packet having the second position) using the same time slot in the next frame (step S12). Thus, an automatic repeat request (ARQ) scheme has been established for the last packet (the packet having the second position).

In other words, the protocols in Fig. 5A and Fig. 7 are only different with regard to the situation when the transmission is to be terminated, i.e. the current packet is the last packet in the queue of sequence of packets. In this case, the apparatus AR for receiving transmits a busy-signal if outage occurred, reserving the next time slot. Since the apparatus AT for transmitting also knows that the last packet is being transmitted, it can correctly conclude that outage occurred, and retransmits the packet in the next slot or the same slot in the next frame. This implements a selective repeat ARQ scheme without any additional signalling, i.e. no "acknowledgement" (ACK) or "no acknowledgement" (NACK) signals need to be exchanged.

In fact, step S12 is similar to step S8, because in both cases the time slot used in a preceding transmission interval is reserved for a transmission in the next frame. The difference between step S8 and step S12 is of course that in step 8 the next packet in a sequence of packets is transmitted and in step S12 the last packet is retransmitted.

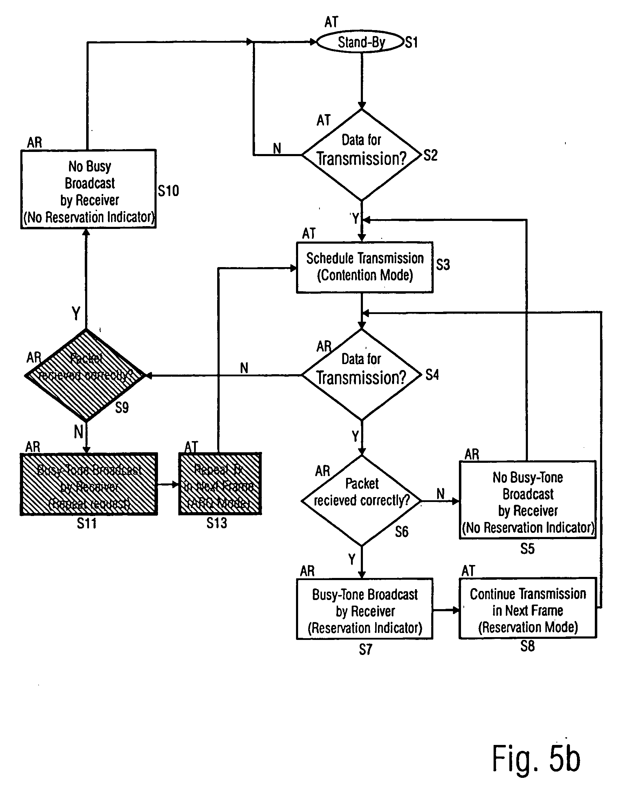

Fig. 5B shows another embodiment of the inventive methods which is very similar to the flow chart of the inventive methods shown in Fig. 5A. The only difference between Fig. 5A and 5B is that after step S11, the apparatus for transmitting AT upon reception of the busy-signal, repeats the transmission of the last packet in the next frame (step S13) by changing into contention mode and rescheduling the transmission (S3). The advantage of an implementation according to Fig. 5B compared to the implantation according to Fig. 5A might be that the probability for a successful retransmission of the last packet is higher using a different time slot in the next frame. This requires that at least two timeslots are occupied by the same user, or that the receiver for at least 2 timeslots is at the same location (which might happen in an uplink transmission). In case of dislocated receivers the protection of the busy slots might not work, since a potential interferer cannot detect the busy burst and might therefore schedule a transmission. On the other hand, the implementation according to Fig. 5B compared to the implementation according to Fig. 5A requires more processing power at the apparatus AT for transmitting due to the search for an available contention slot. Furthermore, an implementation according to Fig. 5B would "waste" the time slot reserved by the busy-signal in the next frame, as all the other apparatus for transmitting would not use this time-slot due to the busy-signal of the apparatus AR for receiving. Furthermore, an inventive implementation according to Fig. 5A, wherein the apparatus AT for transmitting would reuse the same time-slot (S12) only in case of an unsuccessful reception of a last packet (S9), or a packet having a second position, and would use a different time-slot (contention mode, S3) in case of unsuccessful reception of other packets (S6), or packets having a first position, the probability of a correct reception (S9, Y) of the retransmitted (S12) last packet.

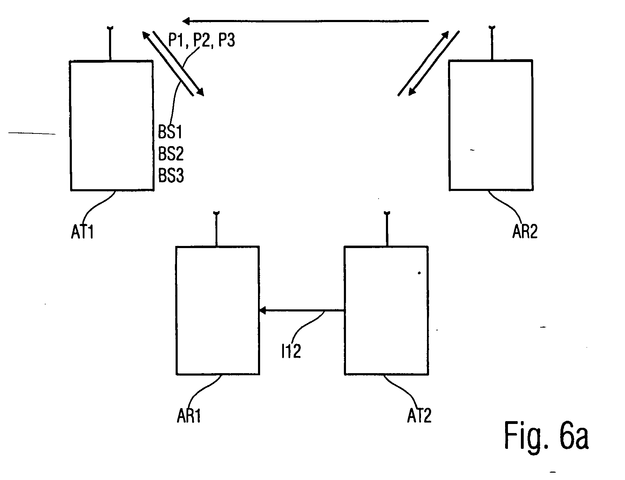

Fig. 6A shows an exemplary scenario similar to Fig. 8, wherein an apparatus AT1 for transmitting wants to transmit packets P1, P2, P3 of a packet sequence to an intended apparatus AR1 for receiving, and wherein a second apparatus AT2 for transmitting, located in the neighbourhood of apparatus AR1 for receiving, wants to transmit data to a second apparatus AR2 for receiving.

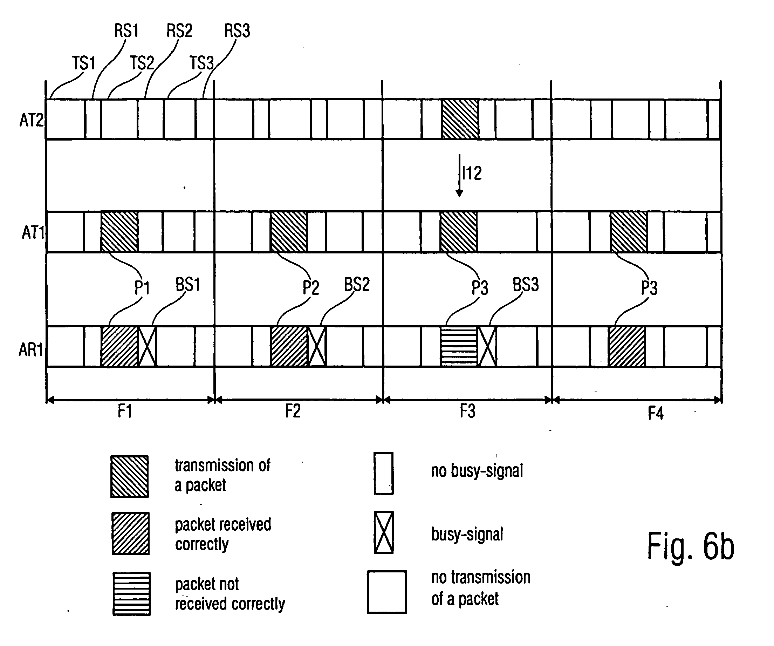

Fig. 6B shows a diagram to explain the invention based on the exemplary scenario shown in Fig. 6A and the embodiment of the inventive method as shown in Fig. 5A, i.e. retransmission of the last packet using the same time slot.

Fig. 6B explains the principle of an inventive BB-TDMA, comprising the apparatus AR1 for receiving, the apparatus AT1 for transmitting and the second apparatus AT2 for transmitting AT2. Fig. 6b shows four TDMA-frames F1 to F4, each comprising three time slots TS1 to TS3 and three mini-time-slots MS1 to MS3, wherein the mini-time-slot MS1 transports the busy-tone respective to the time-slot TS1, etc..

The apparatus AT1 for transmitting wants to transmit the sequence of three packets P1, P2, P3 to the apparatus AR1 for receiving. In the first frame F1 the apparatus AT1 for transmitting transmits the first packet P1 in the second time slot TS2, the apparatus AR1 for receiving receives the first packet P1 correctly and transmits the respective first busy-signal BS1 in mini-slot MS2. The apparatus AT1 for transmitting is in reservation mode and transmits the second packet P2 reusing the same, second time slot TS2 within the second frame F2. The apparatus AR1 for receiving receives the second packet P2 again correctly and transmits the respective second busy-signal BS2 in mini-slot MS2. Still in reservation mode, the apparatus AT1 for transmitting transmits the third packet P3 in the second time-slot TS2 in the third frame F3. The apparatus AR1 for receiving this time does not receive the third packet P3 correctly due to the interference I12 caused by a parallel transmission of a packet on the second time slot TS2 by the second apparatus AT2 for transmitting. As the third packet P3 is the last packet, the apparatus for receiving AR1 transmits a busy-signal BS3 on mini-slot MS2 to request a retransmission of the last packet P3 by the apparatus AT1 for transmitting. The apparatus AT1 for transmitting receives the third busy-signal BS3 and retransmits accordingly the last packet P3 in the same time-slot TS2 in the fourth frame F4. This time, the apparatus AR1 for receiving receives the last packet P3 correctly and acknowledges the correct reception by not sending a busy-signal on the mini-slot MS2. Thus, a correct transmission of the whole sequence of packets P1 to P3 has been assured.

It is obvious, that the invention is not limited to the order of the steps as shown in Figs. 3 and 4 as, for example, the apparatus for receiving can also first check whether the data has been received correctly and then check, whether the received packet is the last packet in order to determine, whether to transmit a busy-signal.

Furthermore, an apparatus for transmitting can be adapted to always check in all mini-slots for the respective busy-signals or can be operative to check only those mini-slots which are assigned to the time-slots the apparatus for transmitting had selected for a transmission and will continue to do so as long as the apparatus for transmitting receives for all selected time-slots the respective busy-signals. In such an embodiment, the apparatus for transmitting will only change into the contention mode in case the apparatus for transmitting does not receive for at least one time-slot the respective busy-signal.

The number of packets can be 2 or any other positive integer N, the general case being defined by N, where, for example, one of the N packets correspond to the 2nd position.

The invention also covers the transmission and reception of sequences comprising only one single packet without the need of amendments of the described inventive apparatus and methods. Then this packet would correspond to the 2nd position.

The invention is not limited to TDMA networks, but can also be applied to other networks like CDMA, FDMA and OFDMA networks. In case of CDMA, data codes are used as data transmission resource, instead of, or in addition to data time-slots/sub-carriers. In case of FDMA, data carriers are used as data transmission resource instead of, or in addition to data time-slots/sub-carriers. In case of OFDMA, data symbols are used as data transmission resource, instead of, or in addition to data time-slots/sub-carriers. In case of OFDMA data symbols are used as data transmission resource instead of, or in addition to data time-slots/sub-carriers.

Generally, this scheme can be applied to a time/frequency slotted system. To this end, OFDMA would specify a frequency slotted system, i.e. the slots are separated in frequency.

Furthermore, combinations of time/frequency slotted systems, i.e. OFDMA-TDMA/TDD are also possible.

The invention may also be used with FDD (Frequency Division Duplex), wherein, for example, the busy-signals for a down link are transmitted on uplink frequencies and the busy-signals for an uplink are transmitted on downlink frequencies. Due to the channel-reciprocity of TDD or TDMA, preferred embodiments of the present invention are based on TDMA/TDD and/or OFDMA/TDD. Channel reciprocity of TDD or TDMA means that a potential interference imposed from, for example, a first mobile station transmitting data on a second mobile station receiving data is identical to the interference the second mobile station transmitting data would impose on the first mobile station receiving data provided that the transmit powers are the same. Referring to Fig. 8, in case of FDD, with transmitter T1 being a base station and receiver R1 being a mobile terminal, the data D1 would, for example, be transmitted on a downlink frequency and the busy signal BS11 on an uplink frequency.

In typical implementations of, for example, BB-TDMA systems, the apparatus for transmitting evaluates the signal power of the various busy-signals to determine whether a transmission on a particular time-slot would cause unacceptable interference to other existing communications of other apparatus for transmitting and apparatus for receiving. In case the power of the busy-signals of other apparatus for receiving are below a certain threshold, the apparatus for transmitting assumes that the interference its transmission would cause to the others is negligible (channel-reciprocity) and would mark these as available contention slots. In case the apparatus for transmitting has transmitted a packet over a particular time-slot, the apparatus for transmitting typically uses a second threshold for the busy-signal powers to determine whether the intended apparatus for receiving AR has transmitted a busy-signal. The first and the second threshold may be the same.

In this context, one further issue can be considered. In the case that the last packet was lost, and a busy-signal is transmitted, it is vitally important that the apparatus for transmitting detects this busy-signal. For any other case, i.e. any other transmission, but the last one, the "loss" of a busy-signal at the apparatus for transmitting has less impact as it would just cause an "unnecessary" retransmission; but nothing would be lost. Therefore, an especially preferred embodiment of the invention considers a slightly different design of the last busy-signal. For example, the transmit power could be increased in order to ensure that the busy-signal fort the last packet reaches the apparatus for transmitting. This solution, to increase the signal power of the last busy-signal, also increases the probability that other apparatus for transmitting detect the last busy signal and, thus, accordingly increases the probability that other apparatus for transmitting will not use the such reserved time slot. Therefore, this solution also improves the probability of a correct reception of the retransmitted last packet.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Apparatus for receiving a sequence of packets, from a transmitter comprising :
a receiver (110) for receiving a packet (P1, P2, P3) of the sequence over a channel and for checking (S6, S9), whether the packet (P1, P2, P3) has been successfully received;
wherein the apparatus for receiving is operative to check (S4), whether the packet (P1, P2, P3) has a first position in the sequence of packets or a second position in the sequence of packets, wherein the first position is any position which is not the last position in the sequence of packets, and wherein the second position is the last position in the sequence of packets;
a busy-signal transmitter (120) for transmitting to said transmitter a busy-signal (BS1, BS2, BS3), wherein the busy-signal transmitter (120) is operative to transmit the busy-signal (BS1, BS2, BS3),
when (S7) the packet (P2) is successfully received over the channel and the packet has the first position in the sequence of packets, and
when (S11) the packet (P3) is not successfully received over the channel and the packet has the second position in the sequence of packets ; and
wherein the apparatus for receiving is operative to decide to not transmit the busy-signal,
when (S10) the packet (P3) is successfully received over the channel and has the second position in the sequence of packets, and
when (S5) the packet (P2) is not successfully received over the channel and has the first position in the sequence of packets.

2. Apparatus for receiving according to claim 1, wherein the busy-signal transmitter (120) is operative to transmit a last busy-signal as busy-signal (BS3), when the packet (P3) has a second position in a sequence of packets, the last busy-signal (BS3) being different to the busy-signal (BS1, BS2).

3. Apparatus for receiving according to claim 2, wherein the busy-signal transmitter (120) is operative to transmit the last busy-signal as busy-signal with a higher transmit power.

4. Apparatus for receiving according to one of the claims 1 to 3, wherein the busy-signal transmitter (120) is operative to transmit a busy-signal (BS1) on a mini-slot (MS2) assigned to a channel (TS2) of a plurality of channels (TS1, TS2, TS3) on which the receiver receives the packet of the sequence.

5. Apparatus for receiving according to one of the claims 1 to 4, wherein the receiver (110) is operative for receiving the packet (P1, P2, P3) of the sequence based on OFDMA/TDD Orthogonal Frequency Division Multiplexing/Time Division Duplexing, or TDMA/TDD, Time Division Multiple Access.

6. Apparatus for transmitting a sequence of packets, comprising:
a busy-signal receiver (210) for receiving a busy-signal (BS1, BS2, BS3) associated to a channel and for checking, whether a busy-signal has been transmitted;
a transmitter (220) for
transmitting (S8) a packet (P3) having a second position in the sequence, wherein the second position is different from a first position in the sequence, and wherein the transmitter (220) is operative to transmit the packet (P3) having the second position over the channel, when the busy-signal (BS2) has been received and the packet (P2) having a penultimate position in the sequence has been transmitted over the channel in a preceding transmission interval (F2), wherein the first position is any position which is not the last position in the sequence of packets, and wherein the second position is the last position in the sequence of packets,
retransmitting (S12, S13) the packet (P3) having the second position over the channel (S12) or over a contention channel (S13), when the busy-signal (BS3) has been received and the packet (P3) having the second position has been transmitted over the channel in a preceding transmission interval (F3), and
retransmitting (S3) the packet (P2) having the first position over a contention channel, when the busy-signal has not been received and the packet (P2) having the first position has been transmitted over the channel in a preceding transmission interval,
wherein (S1) the apparatus for transmitting terminates the transmission of the sequence of packets, when the busy-signal has not been received and the packet (P3) having the second position has been transmitted over the channel in a preceding transmission interval, and
wherein a contention channel for retransmitting a packet is determined by not detecting a busy-signal for the contention channel in the preceding time interval.

7. Apparatus for transmitting according to claim 6, wherein the transmitter (220) is operative to retransmit the packet (P3) having the second position on a same channel (TS2) of a plurality of channels (TS1, TS2, TS3) as the transmitter (220) transmitted the packet (P3) having the second position in a preceding transmission interval (F3).

8. Apparatus for transmitting according to claims 6 or 7 wherein the transmitter (220) is operative for transmitting the packet (P1, P2, P3) of the sequence based on OFDM/TDD or TDMA/TDD.

9. Method for receiving a sequence of packets from a transmitter, comprising the following steps:
Receiving a packet (P1, P2, P3) of the sequence over a channel and checking (S6, S9) whether the packet (P1, P2, P3) has been successfully received;
Checking (S4), whether the packet (P1, P2, P3) has a first position in the sequence of packets or a second position in the sequence of packets, wherein the first position is any position which is not the last position in the sequence of packets, and wherein the second position is the last position in the sequence of packets;
Transmitting a busy-signal (BS1, BS2, BS3) to said transmitter , wherein the busy-signal (BS1, BS2, BS3) is transmitted,
when (S7) the packet (P2) is successfully received over the channel and the packet has the first position in the sequence of packets (S7), and
when (S11) the packet (P3) is not successfully received over the channel and the packet has the second position in the sequence of packets (S11)
; and
deciding (S10) to not transmit the busy-signal
when (S10) the packet (P3) is successfully received over the channel and has the second position in the sequence of packets, and
when (S5) the packet (P2) is not successfully received over the channel and has the first position in the sequence of packets.

10. Method for transmitting a sequence of packets, comprising the following steps:
receiving a busy-signal (BS1, BS2, BS3) and checking, whether a busy-signal (BS1, BS2, BS3) associated to a channel has been transmitted;
transmitting (S8) a packet (P3) having a second position of the sequence, wherein the second position is different from a first position in the sequence, and wherein the packet (P3) having the second position is transmitted over the channel, when the busy-signal (BS2) has been received and the packet (P2) having a penultimate position in the sequence has been transmitted over the channel in a preceding transmission interval (F2), wherein the first position is any position which is not the last position in the sequence of packets, and wherein the second position is the last position in the sequence of packets,
retransmitting (S12; S13) the packet (P3) having the second position over the channel (S12) or over a contention channel (S13), when the busy-signal (BS3) has been received and the packet (P3) having the second position has been transmitted over the channel in a preceding transmission interval (F3), and
retransmitting (S3) the packet (P2) having the first position over a contention channel, when the busy-signal has not been received and the packet (P2) having the first position has been transmitted over the channel in a preceding transmission interval,
wherein (S1) the transmission of the sequence of packets terminates, when the busy-signal has not been received and the packet (P3) having the second position has been transmitted over the channel in a preceding transmission interval, and
wherein a contention channel for retransmitting a packet is determined by not detecting a busy-signal for the contention channel in the preceding time interval.

11. Computer program having a program code for performing a method in accordance with claims 9 or 10, when the program runs on a computer.

## Patentansprüche

1. Vorrichtung zum Empfangen einer Sequenz von Paketen von einem Sender, mit folgenden Merkmalen:
einem Empfänger (110) zum Empfangen eines Pakets (P1, P2, P3) der Sequenz über einen Kanal und zum Prüfen (S6, S9), ob das Paket (P1, P2, P3) erfolgreich empfangen wurde;
wobei die Vorrichtung zum Empfangen wirksam ist, um zu prüfen (S4), ob das Paket (P1, P2, P3) eine erste Position in der Sequenz von Paketen oder eine zweite Position in der Sequenz von Paketen aufweist, wobei die erste Position irgendeine Position ist, die nicht die letzte Position in der Sequenz von Paketen ist, und wobei die zweite Position die letzte Position in der Sequenz von Paketen ist;
einem Belegtsignalsender (120) zum Senden eines Belegtsignals (BS1, BS2, BS3) an den Sender, wobei der Belegtsignalsender (120) wirksam ist, um das Belegtsignal (BS1, BS2, BS3) zu senden,
wenn (S7) das Paket (P2) erfolgreich über den Kanal empfangen wird und das Paket die erste Position in der Sequenz von Paketen aufweist, und
wenn (S11) das Paket (P3) nicht erfolgreich über den Kanal empfangen wird und das Paket die zweite Position in der Sequenz von Paketen aufweist; und
wobei die Vorrichtung zum Empfangen wirksam ist, um zu beschließen, das Belegtsignal nicht zu senden,
wenn (S10) das Paket (P3) erfolgreich über den Kanal empfangen wird und die zweite Position in der Sequenz von Paketen aufweist, und
wenn (S5) das Paket (P2) nicht erfolgreich über den Kanal empfangen wird und die erste Position in der Sequenz von Paketen aufweist.

2. Vorrichtung zum Empfangen gemäß Anspruch 1, bei der der Belegtsignalsender (120) wirksam ist, um das letzte Belegtsignal als das Belegtsignal (BS3) zu senden, wenn das Paket (P3) eine zweite Position in einer Sequenz von Paketen aufweist, wobei sich das letzte Belegtsignal (BS3) von dem Belegtsignal (BS1, BS2) unterscheidet.

3. Vorrichtung zum Empfangen gemäß Anspruch 2, bei der der Belegtsignalsender (120) wirksam ist, um das letzte Belegtsignal als ein Belegtsignal mit einer höheren Sendeleistung zu senden.

4. Vorrichtung zum Empfangen gemäß einem der Ansprüche 1 bis 3, bei der der Belegtsignalsender (120) wirksam ist, um ein Belegtsignal (BS1) an einen Minischlitz (MS2) zu senden, der einem Kanal (TS2) einer Mehrzahl von Kanälen (TS1, TS2, TS3) zugeordnet ist, auf dem der Empfänger das Paket der Sequenz empfängt.

5. Vorrichtung zum Empfangen gemäß einem der Ansprüche 1 bis 4, bei der der Empfänger (110) zum Empfangen des Pakets (P1, P2, P3) der Sequenz auf der Basis von OFDMA/TDD, Orthogonal Frequency Division Multiplexing/Time Division Duplexing (Orthogonal-Frequenzteilungsmultiplexen/Zeitteilungsduplexen), oder TDMA/TDD, Time Division Multiple Access (Zeitteilungsmehrfachzugriff), wirksam ist.

6. Vorrichtung zum Senden einer Sequenz von Paketen, mit folgenden Merkmalen:
einem Belegtsignalempfänger (210) zum Empfangen eines Belegtsignals (BS1, BS2, BS3), das einem Kanal zugeordnet ist, und zum Prüfen, ob ein Belegtsignal gesendet wurde;
einem Sender (220) zum
Senden (S8) eines Pakets (P3) mit einer zweiten Position in der Sequenz, wobei die zweite Position sich von einer ersten Position in der Sequenz unterscheidet, und wobei der Sender (220) wirksam ist, um das Paket (P3), das die zweite Position aufweist, über den Kanal zu senden, wenn das Belegtsignal (BS2) empfangen wurde und das Paket (P2), das eine vorletzte Position in der Sequenz aufweist, in einem vorhergehenden Sendeintervall (F2) über den Kanal gesendet wurde, wobei die erste Position irgendeine Position ist, die nicht die letzte Position in der Sequenz von Paketen ist, und wobei die zweite Position die letzte Position in der Sequenz von Paketen ist,
erneuten Senden (S12, S13) des Pakets (P3), das die zweite Position aufweist, über den Kanal (S 12) oder über einen Konkurrenzkanal (S13), wenn das Belegtsignal (BS3) empfangen wurde und das Paket (P3), das die zweite Position aufweist, in einem vorhergehenden Sendeintervall (F3) über den Kanal gesendet wurde, und
erneuten Senden (S3) des Pakets (P2), das die erste Position aufweist, über einen Konkurrenzkanal, wenn das Belegtsignal nicht empfangen wurde und das Paket (P2), das die erste Position aufweist, in einem vorhergehenden Sendeintervall über den Kanal gesendet wurde,
wobei (S1) die Vorrichtung zum Senden die Übertragung der Sequenz von Paketen beendet, wenn das Belegtsignal nicht empfangen wurde und das Paket (P3), das die zweite Position aufweist, in einem vorhergehenden Sendeintervall über den Kanal gesendet wurde, und
wobei ein Konkurrenzkanal zum erneuten Senden eines Pakets durch ein Nichterfassen eines Belegtsignals für den Konkurrenzkanal in dem vorhergehenden Zeitintervall bestimmt ist.

7. Vorrichtung zum Senden gemäß Anspruch 6, bei der der Sender (220) wirksam ist, um das Paket (P3), das die zweite Position aufweist, auf dem gleichen Kanal (TS2) einer Mehrzahl von Kanälen (TS1, TS2, TS3) erneut zu senden, auf dem der Sender (220) das Paket (P3), das die zweite Position aufweist, in einem vorhergehenden Sendeintervall (F3) sendete.

8. Vorrichtung zum Senden gemäß Anspruch 6 oder 7, bei der der Sender (220) zum Senden des Pakets (P1, P2, P3) der Sequenz auf der Basis von OFDM/TDD oder TDMA/TDD wirksam ist.

9. Verfahren zum Empfangen einer Sequenz von Paketen von einem Sender, das folgende Schritte aufweist:
Empfangen eines Pakets (P1, P2, P3) der Sequenz über einen Kanal und Prüfen (S6, S9), ob das Paket (P1, P2, P3) erfolgreich empfangen wurde;
Prüfen (S4), ob das Paket (P1, P2, P3) eine erste Position in der Sequenz von Paketen oder eine zweite Position in der Sequenz von Paketen aufweist, wobei die erste Position irgendeine Position ist, die nicht die letzte Position in der Sequenz von Paketen ist, und wobei die zweite Position die letzte Position in der Sequenz von Paketen ist;
Senden eines Belegtsignals (BS1, BS2, BS3) an den Sender, wobei das Belegtsignal (BS1, BS2, BS3) gesendet wird,
wenn (S7) das Paket (P2) erfolgreich über den Kanal empfangen wird und das Paket die erste Position in der Sequenz von Paketen aufweist (S7), und
wenn (S 11) das Paket (P3) nicht erfolgreich über den Kanal empfangen wird und das Paket die zweite Position in der Sequenz von Paketen aufweist (S11); und
Beschließen (S10), das Belegtsignal nicht zu senden,
wenn (S10) das Paket (P3) erfolgreich über den Kanal empfangen wird und die zweite Position in der Sequenz von Paketen aufweist, und
wenn (S5) das Paket (P2) nicht erfolgreich über den Kanal empfangen wird und die erste Position in der Sequenz von Paketen aufweist.

10. Verfahren zum Senden einer Sequenz von Paketen, das folgende Schritte aufweist:
Empfangen eines Belegtsignals (BS1, BS2, BS3) und Prüfen, ob ein Belegtsignal, das einem Kanal zugeordnet ist, gesendet wurde;
Senden (S8) eines Pakets (P3) mit einer zweiten Position in der Sequenz, wobei die zweite Position sich von einer ersten Position in der Sequenz unterscheidet, und wobei der Sender (220) wirksam ist, um das Paket (P3), das die zweite Position aufweist, über den Kanal zu senden, wenn das Belegtsignal (BS2) empfangen wurde und das Paket (P2), das eine vorletzte Position in der Sequenz aufweist, in einem vorhergehenden Sendeintervall (F2) über den Kanal gesendet wurde, wobei die erste Position irgendeine Position ist, die nicht die letzte Position in der Sequenz von Paketen ist, und wobei die zweite Position die letzte Position in der Sequenz von Paketen ist,
erneutes Senden (S12, S13) des Pakets (P3), das die zweite Position aufweist, über den Kanal (S12) oder über einen Konkurrenzkanal (S13), wenn das Belegtsignal (BS3) empfangen wurde und das Paket (P3), das die zweite Position aufweist, in einem vorhergehenden Sendeintervall (F3) über den Kanal gesendet wurde, und
erneutes Senden (S3) des Pakets (P2), das die erste Position aufweist, über einen Konkurrenzkanal, wenn das Belegtsignal nicht empfangen wurde und das Paket (P2), das die erste Position aufweist, in einem vorhergehenden Sendeintervall über den Kanal gesendet wurde,
wobei (S1) die Übertragung der Sequenz von Paketen endet, wenn das Belegtsignal nicht empfangen wurde und das Paket (P3), das die zweite Position aufweist, in einem vorhergehenden Sendeintervall über den Kanal gesendet wurde, und
wobei ein Konkurrenzkanal zum erneuten Senden eines Pakets durch ein Nichterfassen eines Belegtsignals für den Konkurrenzkanal in dem vorhergehenden Zeitintervall bestimmt ist.

11. Computerprogramm mit einem Programmcode zum Durchführen eines Verfahrens gemäß einem der Ansprüche 9 oder 10, wenn das Programm auf einem Computer abläuft.

## Revendications

1. Appareil pour recevoir une séquence de paquets d'un émetteur, comprenant:
un récepteur (110) destiné à recevoir un paquet (P1, P2, P3) de la séquence via un canal et à vérifier (S6, S9) si le paquet (P1, P2, P3) a été reçu avec succès;
dans lequel l'appareil pour recevoir est opérationnel pour vérifier (S4) si le paquet (P1, P2, P3) a une première position dans la séquence de paquets ou une deuxième position dans la séquence de paquets, où la première position est toute position qui n'est pas la dernière position dans la séquence de paquets, et où la deuxième position est la dernière position dans la séquence de paquets;
un émetteur de signal occupé (120) destiné à transmettre audit émetteur un signal occupé (BS1, BS2, BS3), où l'émetteur de signal occupé (120) est opérationnel pour transmettre le signal occupé (BS1, BS2, BS3),
lorsque (S7) le paquet (P2) est reçu avec succès via le canal et que le paquet a la première position dans la séquence de paquets, et
lorsque (S11) le paquet (P3) n'est pas reçu avec succès via le canal et que le paquet a la deuxième position dans la séquence de paquets; et
dans lequel l'appareil pour recevoir est opérationnel pour décider de ne pas transmettre le signal occupé,
lorsque (S10) le paquet (P3) est reçu avec succès via le canal et a la deuxième position dans la séquence de paquets, et
lorsque (S5) le paquet (P2) n'est pas reçu avec succès via le canal et a la première position dans la séquence de paquets.

2. Appareil pour recevoir selon la revendication 1, dans lequel l'émetteur de signal occupé (120) est opérationnel pour transmettre un dernier signal occupé comme signal occupé (BS3) lorsque le paquet (P3) a une deuxième position dans une séquence de paquets, le dernier signal occupé (BS3) étant différent du signal occupé (BS1, BS2).

3. Appareil pour recevoir selon la revendication 2, dans lequel l'émetteur de signal occupé (120) est opérationnel pour transmettre le dernier signal occupé comme signal occupé à puissance de transmission supérieure.

4. Appareil pour recevoir selon l'une des revendications 1 à 3, dans lequel l'émetteur de signal occupé (120) est opérationnel pour transmettre un signal occupé (BS1) sur un mini-intervalle (MS2) attribué à un canal (TS2) parmi une pluralité de canaux (TS1, TS2, TS3) sur lequel le récepteur reçoit le paquet de la séquence.

5. Appareil pour recevoir selon l'une des revendications 1 à 4, dans lequel le récepteur (110) est opérationnel pour recevoir le paquet (P1, P2, P3) de la séquence sur base de OFDMA/TDD, Multiplexage Orthogonal par Répartition en Fréquences/ Duplexage par Répartition dans le Temps, ou TDMA/TDD, Accès Multiple à Répartition dans le Temps.

6. Appareil pour transmettre une séquence de paquets, comprenant:
un récepteur de signal occupé (210) destiné à recevoir un signal occupé (BS1, BS2, BS3) associé à un canal et à vérifier si un signal occupé a été transmis;
un émetteur (220) destiné à
transmettre (S8) un paquet (P3) ayant une deuxième position dans la séquence, où la deuxième position est différente d'une première position dans la séquence, et où l'émetteur (220) est opérationnel pour transmettre le paquet (P3) ayant la deuxième position via le canal lorsque le signal occupé (BS2) a été reçu et que le paquet (P2) ayant une pénultième position dans la séquence a été transmis via le canal dans un intervalle de transmission précédent (F2), où la première position est toute position qui n'est pas la dernière position dans la séquence de paquets, et où la deuxième position est la dernière position dans la séquence de paquets,
retransmettre (S 12, S 13) le paquet (P3) ayant la deuxième position via le canal (S12) ou via un canal de contention (S13) lorsque le signal occupé (BS3) a été reçu et que le paquet (P3) ayant la deuxième position a été transmis via le canal dans un intervalle de transmission précédent (F3), et
retransmettre (S3) le paquet (P2) ayant la première position via un canal de contention lorsque le signal occupé n'a pas été reçu et que le paquet (P2) ayant la première position a été transmis via le canal dans un intervalle de transmission précédent,
dans lequel (S1) l'appareil pour transmettre termine la transmission de la séquence de paquets lorsque le signal occupé n'a pas été reçu et que le paquet (P3) ayant la deuxième position a été transmis via le canal dans un intervalle de transmission précédent, et
dans lequel un canal de contention pour retransmettre un paquet est déterminé en ne détectant pas de signal occupé pour le canal de contention dans l'intervalle de transmission précédent.

7. Appareil pour transmettre selon la revendication 6, dans lequel l'émetteur (220) est opérationnel pour retransmettre le paquet (P3) ayant la deuxième position sur un même canal (TS2) parmi une pluralité de canaux (TS1, TS2, TS3) que celui via lequel l'émetteur (220) a transmis le paquet (P3) ayant la deuxième position dans un intervalle de transmission précédent (F3).

8. Appareil pour transmettre selon la revendication 6 ou 7, dans lequel l'émetteur (220) est opérationnel pour transmettre le paquet (P1, P2, P3) de la séquence sur base de OFDM/TDD ou TDMA/TDD.

9. Procédé pour recevoir une séquence de paquets d'un émetteur, comprenant les étapes suivantes consistant à:
recevoir un paquet (P1, P2, P3) de la séquence via un canal et vérifier (S6, S9) si le paquet (P1, P2, P3) a été reçu avec succès;
vérifier (S4) si le paquet (P1, P2, P3) a une première position dans la séquence de paquets ou une deuxième position dans la séquence de paquets, où la première position est toute position qui n'est pas la dernière position dans la séquence de paquets, et où 1 deuxième position est la dernière position dans la séquence de paquets;
transmettre un signal occupé (BS1, BS2, BS3) audit émetteur, où le signal occupé (BS1, BS2, BS3) est transmis
lorsque (S7) le paquet (P2) est reçu avec succès via le canal et que le paquet a la première position dans la séquence de paquets (S7), et
lorsque (S11) le paquet (P3) n'est pas reçu avec succès via le canal et que le paquet a la deuxième position dans la séquence de paquets (S11); et
décider (S10) de ne pas transmettre le signal occupé
lorsque (S10) le paquet (P3) est reçu avec succès via le canal et a la deuxième position dans la séquence de paquets, et
lorsque (S5) le paquet (P2) n'est pas reçu avec succès via le canal et a la première position dans la séquence de paquets.

10. Procédé pour transmettre une séquence de paquets, comprenant les étapes suivantes consistant à:
recevoir un signal occupé (BS1, BS2, BS3) et vérifier si un signal occupé (BS1, BS2, BS3) associé à un canal a été transmis;
transmettre (S8) un paquet (P3) ayant une deuxième position de la séquence, où la deuxième position est différente d'une première position dans la séquence, et où le paquet (P3) ayant la deuxième position est transmis via le canal lorsque le signal occupé (BS2) a été reçu et que le paquet (P2) ayant une pénultième position dans la séquence a été transmis via le canal dans un intervalle de transmission précédent (F2), où la première position est toute position qui n'est pas la dernière position dans la séquence de paquets, et où la deuxième position est la dernière position dans la séquence de paquets,
retransmettre (512; S 13) le paquet (P3) ayant la deuxième position via le canal (S12) ou via un canal de contention (S13) lorsque le signal occupé (BS3) a été reçu et que le paquet (P3) ayant la deuxième position a été transmis via le canal dans un intervalle de transmission précédent (F3), et
retransmettre (S3) le paquet (P2) ayant la première position via un canal de contention lorsque le signal occupé n'a pas été reçu et que le paquet (P2) ayant la première position a été transmis via le canal dans un intervalle de transmission précédent,
où (S1) la transmission de la séquence de paquets se termine lorsque le signal occupé n'a pas été reçu et que le paquet (P3) ayant la deuxième position a été transmis via le canal dans un intervalle de transmission précédent, et
où un canal de contention pour retransmettre un paquet est déterminé en ne détectant pas de signal occupé pour le canal de contention dans l'intervalle de temps précédent.

11. Programme d'ordinateur ayant un code de programme pour réaliser un procédé selon les revendications 9 ou 10 lorsque le programme est exécuté sur un ordinateur.
